# EUROPÄISCHE PATENTSCHRIFT

(11) **EP 0 554 769 B1**
(45) Veröffentlichungstag und Bekanntmachung des Hinweises auf die Patenterteilung: **08.01.1997**
(21) Anmeldenummer: 93101176.1
(22) Anmeldetag: 27.01.1993
(51) Int. Cl.: B65G 47/50

(54) **Transportsystem zum Transportieren von durch Kodiermittel kenntlich gemachtem Transportgut**
Transporting system for transporting goods identified by coding means
Système de transport pour transporter des marchandises identifiées par des moyens de codage

(30) Priorität: 04.02.1992 DE 4203074
(43) Veröffentlichungstag der Anmeldung: 11.08.1993
(73) Patentinhaber: Alcatel SEL Aktiengesellschaft, D-70435 Stuttgart (DE)
(72) Erfinder: Ebertz, Klaus, W-7000 Stuttgart 80 (DE); Fischer, Otto, W-7144 Asperg (DE); Klotz, Roland, W-7142 Marbach (DE); Koch, Helmut Willi, W-7036 Schönaich (DE); Siegle, Erich, W-7147 Eberdingen-Hochdorf (DE); Westerwalbesloh, Hans-Jürgen, W-7121 Mundelsheim (DE)
(74) Vertreter: Pohl, Herbert, Dipl.-Ing

(56) Entgegenhaltungen:
- AT-B- 304 359
- DE-A- 2 041 364
- DE-A- 2 710 943
- US-A- 4 718 810

## Beschreibung

Die Erfindung betrifft ein Transportsystem nach dem Oberbegriff des Anspruchs 1.

Ein Transportsystem nach dem Oberbegriff des Anspruchs 1 ist aus dem Dokument US-A-4,718,810 bekannt. Bei diesem System wird ein externer Rechner verwendet, in dem die Kenndaten eines Steuerprogramms gespeichert sind. Der Rechner ist elektrisch mit zwei im Transportwagen angeordneten Mikrocomputern verbunden. Die hierbei benutzte Datenübertragungsstrecke besteht aus mehreren, über dem Transportgestell befestigten Stromschienen und einem mit den Mikrocomputern verbundenen Stromabnehmer des Transportwagens. Der Stromabnehmer ist außerdem so ausgebildet, daß er weitere, parallel angeordnete Stromschienen kontaktiert, die zur Stromversorgung der Motoren des Transportwagens dienen. Ein erster Mikrocomputer steuert über einen Verstärker und einen mit diesem verbundenen Motortreiber den Antriebsmotor im Transportwagen, während der mit dem ersten verbundene zweite Mikrocomputer über weitere Verstärker und Motortreiber die Antriebsmotoren für die Bewegungen eines drehbaren Wagenoberteils und die Bewegungen eines darauf montierten Greifers steuert.

In der DE-OS 37 38 052 ist ein Verfahren und ein System zum Lagern und Bereitstellen von Verarbeitungsgut beschrieben, bei dem Behälter oder Paletten mit Hilfe eines Lagersystemrechners automatisch in vorgesehene Plätze eines Regallagers ein-, aus- und umgelagert werden. Dieses Lager besteht aus mehreren, paarweise nebeneinander angeordneten Regalen. In den dazwischen liegenden Regalgassen können Regalbediengeräte bewegt werden, die das Ein- und Auslagern in den Regalen besorgen. Staurollenbahnen vor den Regalen dienen zum Zwischenlagern der Behälter und werden einerseits von den Regalbediengeräten und andererseits von einem quer zu den Regalen verfahrbaren Verteilerwagen bedient. In den Regalgassen sind außerdem Fertigungsstraßen installiert, die in das Lagersystem einbezogen sind und beschickt werden können.

Der übergeordnete Lagersystemrechner verwaltet den Bestand und überwacht z.B. Stückzahl, Lagerort und -vergabe, während die gesamte Steuerung der Fördermittel durch Prozeßrechner erfolgt. Über die Art des Datenflusses der einzelnen Komponenten des Systems sind keine Angaben vorhanden.

Ferner ist aus der Zeitschrift "Transport-, Förder- und Lagertechnik" Nr. 6/1983, Seiten 19 und 20, ein "Kommissionierroboter" mit einem an Regalen entlang fahrbaren Fahrzeug bekannt, das mit einer Greifvorrichtung (Roboter) und einem Palettenträger zum Abstellen der Lagerpaletten während des Transports ausgerüstet ist. Die Greiffunktion wird von einer Saugvorrichtung mit Vakuumpumpe auf dem Fahrzeug ausgeführt. Während letzteres nur linear verfahrbar ist, hat die Greifvorrichtung fünf Bewegungsachsen. Die Ablaufsteuerung des Roboters und die Lagerverwaltung geschieht durch einen Prozeßrechner, der seine Befehle und Daten über einen Mikroprozessor als Datenpuffer an einen Roboterrechner gibt. Wie die Datenübertragung erfolgt, ist nicht erwähnt.

Außerdem ist in der Zeitschrift "Deutsche Hebe- und Fördertechnik" 1986, Heft 12, Seiten 19 ff. der Einsatz drahtloser Übertragungstechniken in Lagersystemen erörtert, unter anderem auch die Infrarot-Datenübertragung. Diese ist in verschiedene Typen gegliedert, unter denen auch ein Typ mit gerichteter Strahlencharakteristik erwähnt ist, bei dem von einem festen Infrarotrelais eine Strahlenkeule mit relativ kleinem Öffnungswinkel ausgesandt wird, die dafür eine relativ große Reichweite haben kann.

Der Erfindung liegt die Aufgabe zugrunde, ein anderes, einfaches Transportsystem zu schaffen, bei dem das Transportgut schnell, automatisch von und zu beliebigen Arbeitsstationen transportiert und, sofern die Zielstation schon besetzt ist, zwischengelagert (gespeichert) werden kann. Die logistische Steuerung des Systems soll mit einem Rechner erfolgen. Gelöst wird diese Aufgabe durch die im Anspruch 1 angegebenen Merkmale. Weiterbildungen sind den Unteransprüchen zu entnehmen. Vorteile dieses Systems sind: signifikante Erhöhung der Transportgeschwindigkeit bei minimaler Leistungsaufnahme durch Verwendung eines ortsfest installierten Rechners und Übertragung der Steuerungs- und Positionsrückmeldungen von und zu dem relativ leichten Transportwagen als Transportmittel über Infrarot-Datenübertragungsstrecken; ferner wahlfreier Zugriff auf das Transportgut in jeder Reihenfolge, wahlfreies, direktes Anfahren jeder Arbeits- und Ablagestation, stets entnahmerichtiges Anliefern des Transportgutes, freie Konfigurierbarkeit der Arbeitsstationen und Zwischenlagerplätze mit einfacher, nachträglicher Änderungsmöglichkeit, ruck- und stoßfreie Fahrbewegungen, Transportieren, Zuteilen und Zwischenlagern des Transportgutes, Steuern und Verwalten des Transportgutes, verbesserte Transparenz der Auftragssteuerung und -verwaltung, Reduzierung der Durchlaufzeiten, Verhüten von Ablauffehlern durch Ablaufvorgabe und -kontrolle mit Rechner; durch Rechner permanente Informationsmöglichkeit über Systemzustand und Auftragsstati; modularer und daher erweiterbarer Aufbau.

Die Erfindung wird anhand eines Ausführungsbeispiels beschrieben, das in den zugehörigen Zeichnungen dargestellt ist. Es zeigen:
- Fig. 1: ein erfindungsgemäßes Transport- und Speichersystem in perspektivischer Ansicht,
- Fig. 2: ein Blockschaltbild des Transportsystems nach Fig. 1.

Das Transport- und Speichersystem, im folgenden kurz als System bezeichnet, ist modular aufgebaut und läßt sich für nahezu jede Art von Transporten von Materialien und Werkstücken von Arbeitsstation zu Arbeitsstation und für das Zwischenlagern einsetzen. Eine Arbeitsstation kann dabei sowohl eine manuelle als auch eine maschinelle Bearbeitungsstation sein.

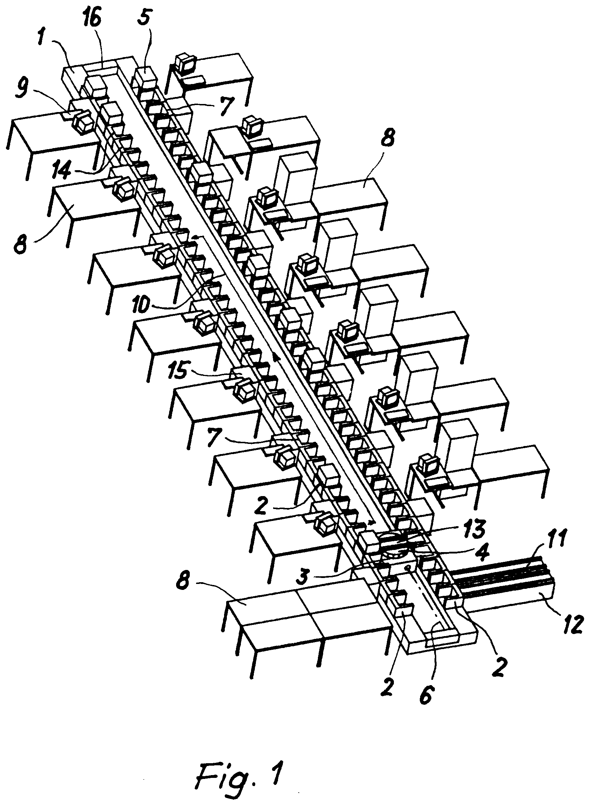

Für den Aufbau des Systems nach Fig. 1 werden benötigt: mindestens ein Transportgestell 1 mit Stellplätzen 2 für das Transportgut 5, ein Transportmittel 3, der im Transportgestell 1 in Längsrichtung verfahrbar ist, eine Steuerung mit Infrarot-Datenübertragung und PC, sowie die erforderliche Software.

Die Stellplätze 2 sind links und rechts im Transportgestell 1 entlang der Fahrstrecke des Transportmittels 3 angebracht. Das Transportmittel ist beispielsweise als Transportwagen 3 ausgebildet. Sie werden entweder als Übergabeplätze 7 in Verbindung mit einer Zuführkonsole 15 an allen Arbeitsstationen 8 und bei Ein- und Ausgabemodulen 11 und 12 genutzt oder als Zwischenlagerplätze 14 an allen übrigen, dazwischen oder daneben liegenden Plätzen.

Der Transportwagen 3 ist innerhalb des Transportgestells 1 zum Beispiel auf Schienen als Führung angeordnet und über dessen gesamte Länge verfahrbar. Der Antrieb erfolgt beispielsweise durch einen stationären Motor und einen Zahnriemen als Kraftübertragungselement (nicht dargestellt). Der Transportwagen 3 ist mit einem Wagenoberteil 4 ausgerüstet, das in 90°-Schritten gedreht werden und wahlfrei zu den Transportgütern 5 auf den Stellplätzen 2 zugreifen oder an den Stirnseiten bzw. den Längsseiten des Transportgestells 1 ein- und ausschleusen kann. Dazu kann ein Schlitten 13 im Wagenoberteil 4 in zwei Richtungen bewegt werden. Beim Abholen und Zuführen wird der Schlitten 13 unter das Transportgut 5 gefahren, angehoben und mit dem Transportgut zurückgezogen oder umgekehrt mit dem Transportgut ausgefahren, abgesenkt, das Transportgut abgesetzt und der Schlitten zurückgefahren.

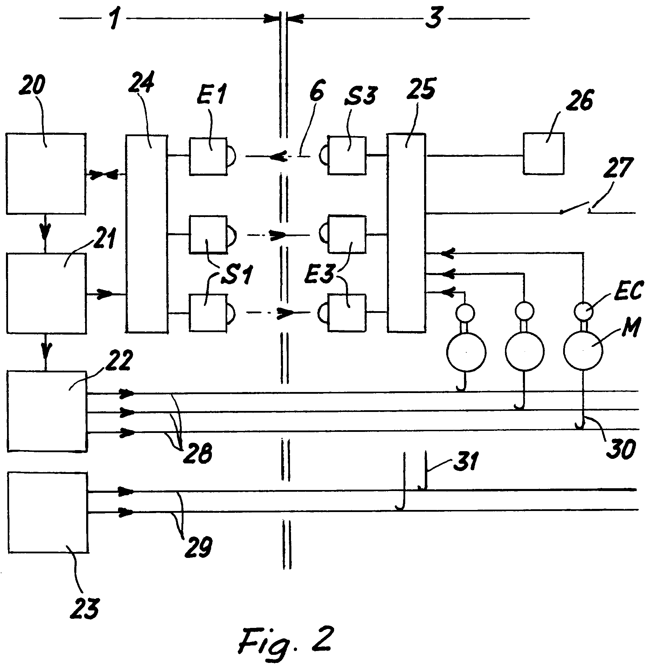

Im Transportwagen 3 sind Motoren M (Fig. 2) für die Drehbewegung des Wagenoberteils 4 und für die Schub- und Hubbewegungen des Schlittens 13 sowie ein Scanner 26 (Fig. 2), mit dem der Barcode des Transportgutes 5 gelesen wird, integriert. Die Motor- und Scannersignale werden mit Infrarot-Datenübertragungsstrecken über die gesamte Länge des Transportgestells 1 übertragen. Ein Strahlengang ist strichpunktiert angedeutet und mit 6 bezeichnet.

Das Transportgut 5 kann aus Paletten oder Behältern bestehen. Diese werden mit dem Transportwagen 3, der innerhalb des Transportgestells 1 fährt, befördert. Der Transportwagen kann programmgesteuert jeden beliebigen Zwischenlagerplatz 14 bzw. jeden beliebigen Übergabeplatz 7 anfahren und dort das Transportgut 5 abholen bzw. absetzen.

Das gesamte System wird durch ein PC-Netzwerk sowie eine speicherprogrammierte Steuerung gesteuert. In den PC werden die auftragsspezifischen Daten, die anzufahrenden Arbeitsstationen sowie deren Reihenfolge eingegeben und gespeichert. Außerdem können mit dem PC jederzeit die aktuellen Betriebszustände des Systems sowie Auftrags- und Bearbeitungszustand der Aufträge abgefragt werden.

Jede Arbeitsstation 8 ist mit einer Bedienkonsole 9 ausgestattet. Damit kann eine Arbeitskraft neu zu bearbeitendes Transportgut 5 anfordern bzw. bearbeitetes Transportgut zur Abholung melden. Die Arbeitsstation wird nach Betätigung einer Taste der Bedienkonsole 9 automatisch in kürzester Zeit mit neuem Transportgut 5 versorgt bzw. das bearbeitete Transportgut abgeholt. Das abgeholte Transportgut wird zur nächsten geplanten Arbeitsstation gebracht, z.B. entsprechend dem Pfeil 10. Besteht keine Anforderung oder ist die Zielarbeitsstation belegt, so wird das Transportgut automatisch an einem Zwischenlagerplatz 14 zwischengelagert. Ist für das Transportgut keine weitere Bearbeitung vorgesehen, so wird dieses zum Ausgabemodul 12 gebracht und dort ausgeschleust.

Das System ist aus folgenden Modulen zusammengesetzt und daher flexibel im Aufbau: Basis-, Arbeitsplatz-, Ein-/Ausgabe- und Verbindungsmodulen.

Ein Basismodul besteht aus einem Transportgestell 1 mit integriertem Antrieb für die Transportwagenlängsbewegung, dem Transportwagen 3 mit Motoren und Infrarot-Datenübertragungsstrecke 6, Steuer- und Verwaltungsrechner sowie einem demontierbaren Endteil 16. Das Basismodul ist z.B. 6,0 m lang, 1,5 m breit und mit Abdeckung 1,0 m hoch. Die Arbeitshöhe kann durch eine Auswahl von Stützen mit unterschiedlichen Längen variiert werden. Ein Basismodul kann mit Verlängerungsmodulen bis auf eine Gesamtlänge von 24 m erweitert werden, wobei auch Zwischenlängen kleiner als 6 m möglich sind.

Stellplätze 2 lassen sich auf beiden Seiten innerhalb des Basismodules installieren, sofern der Platz nicht durch Peripherie- oder Verbindungsmodule belegt ist. Das Rastermaß der Stellplätze beträgt beim genannten Beispiel 410 mm. Die Stellplätze 2 und sind für Transportgutbehälter mit einer Länge von 400 mm und einer Breite von 300 mm ausgelegt. Auf einer Transportstreckenlänge von 24 m lassen sich 2 mal 55 Stellplätze installieren.

Das Arbeitsplatzmodul enthält den Übergabeplatz 7 für die externen Arbeitsstationen 8. Bei manuellen Arbeitsstationen 8 entnimmt die Arbeitskraft das Transportgut 5 manuell dem Arbeitsplatzmodul und setzt es manuell wieder auf das Arbeitsplatzmodul zurück. Eine automatische Versorgung von Maschinen statt der manuellen Arbeitsstationen 8 ist ebenfalls möglich. In einer Ausbauvariante können dem Arbeitsplatzmodul zwei Übergabeplätze 7 zugeordnet werden, je einer für die Zu- und für die Abführung.

Ein- und Ausgabemodule sind im wesentlichen einander gleich, jedoch im Betrieb gegenläufig. Sie sind mit Doppelgurtbändern als Transportmittel ausgerüstet, mittels denen das Transportgut 5 bewegt wird. Das Transportgut 5 wird dem System über das Eingabemodul 11 zugeführt bzw. nach der letzten Bearbeitungsstufe über das Ausgabemodul 12 abgeführt.

Als Option sind ferner Verbindungsmodule vorgesehen (nicht dargestellt). Die Verbindungsmodule verknüpfen zwei Systeme (mit jeweils einem Transportwagen) miteinander. Längsverbinder verbinden dabei zwei hintereinander, Querverbinder zwei parallel und T-Verbinder zwei senkrecht zueinander angeordnete Systeme. Außerdem sind noch Hubmodule möglich, mit denen Höhendifferenzen überwunden bzw. Verkehrswegüberquerungen realisierbar sind.

Fig. 2 zeigt das Schaltbild des Systems ohne PC-Netz. In der Mitte ist eine Trennlinie eingezeichnet, links davon sind die im Transportgestell 1 und rechts davon die im Transportwagen 3 untergebrachten Schaltungseinheiten angegeben. Demnach befinden sich die für den Transportablauf wichtigen Einheiten Rechner 20, Motorsteuerung 21, Motortreiber 22 sowie eine Stromversorgung 23 im Transportgestell 1, während im Transportwagen 3 die Motoren M mit Stellungsgebern oder Encodern EC für die nötigen Bewegungen des Schlittens 13, wie Drehen, Aus- und Einfahren, Heben und Senken usw., sowie der Barcodeleser oder Scanner 26 und nach Bedarf eine größere Anzahl Endschalter 27 untergebracht sind. Als Encoder EC dienen z.B. auf der Motorwelle befestigte Schlitzscheiben, von denen die Stellung abgelesen wird.

Der Datenaustausch zwischen Transportgestell 1 und Transportwagen 3 bzw. den zuvor genannten Schaltungseinheiten erfolgt mittels Infrarotstrahlen über schnelle Datenübertragungsstrecken 6 mit z.B. 200 kBd, weshalb sowohl im Transportgestell 1 als auch im Transportwagen 3 eine entsprechende Anzahl Sender S und Empfänger E als elektrooptische Wandler angebracht sind, die jeweils über einen Multiplexer/Demultiplexer 24 (im Gestell 1) oder 25 (im Wagen 3) mit den anderen Schatlungseinheiten verbunden sind.

Die Steuerung und Verwaltung des Transportsystems obliegt dem Rechner 20. Er fragt die Sensoren, wie Endschalter 27, Scanner 26 usw. ab und gibt Steuerbefehle an die Motorsteuerungen 21, die ihrerseits die Motoren M unter Abfrage der Encoder EC über Motortreiber 22 steuern. Ihren Strom erhalten die Motoren M von den Motortreibern 22 jeweils über Stromschienen 28, die im Transportgestell 1 angeordnet sind und mittels am Transportwagen 3 angebrachter Schleifkontakte 30 abgegriffen werden. Für den allgemeinen Energiebedarf des Transportwagens 3 ist eine Stromversorgung 23 mit weiteren Stromschienen 29 vorgesehen, an denen Schleifkontakte 31 des Transportwagens 3 gleiten. Die Signale des Rechners 20 und der Motorsteuerung 21 an den Transportwagen 3 gehen über den Multiplexer 24 zu den Infrarotsendern S1, die sie zu den Empfängern E3 im Transportwagen 3 abstrahlen. Von letzteren gelangen die Signale über den Demultiplexer 25 zu dem Scanner 26, Endschaltern 27 usw. Umgekehrt gehen deren Signale an den Rechner über den Multiplexer 25, Sender S3, Datenübertragungsstrecke 6 zu den Empfängern E1 und von da über den Demultiplexer 24 zum Rechner 20.

Anhand eines Transport-Beispiels soll im folgenden die Funktionsweise nochmals verdeutlicht werden. Über das Eingabemodul 11 wird ein Transportgut 5, beispielsweise ein kastenförmiger Behälter mit Baugruppen in Form von zu bestückenden Leiterplatten, in das Transportsystem eingegeben. Die Gurtbänder des Eingabemoduls 11 befördern das Transportgut 5 bis zum benachbarten Stellplatz 2 des Transportgestells 1, der einen Übergabeplatz 7 bildet. Vom Rechner 20, dem die Codierung sämtlicher Transportbehälter sowie ein Programm für den folgerichtigen Transport der Behälter von Arbeitsstation zu Arbeitsstation eingegeben sind, erhält der Transportwagen 3 über die Datenübertragungsstrecke 6 den Befehl, das Transportgut vom genannten Übergabeplatz 7 abzuholen und zu einem bestimmten Übergabeplatz 7 einer Arbeitsstation 8 zur Bestückung zu bringen.

Der Transportwagen 3 fährt sofort zum Stellplatz 2 am Eingabemodul 11, dreht sein Wagenoberteil 4 quer, schiebt den Schlitten 13 abgesenkt unter das Transportgut, hebt es an und zieht den Schlitten mit dem Transportgut zurück. Danach dreht er das Wagenoberteil 3 wieder in Fahrtrichtung des Transportwagens und fährt zum vorbestimmten Übergabeplatz 7. Zugleich hat der Scanner 26 des Transportwagens 3 die Daten des Transportgutes 5 (Barcode) gelesen und dem Rechner 20 über die Datenübertragungsstrecke 6 gemeldet. Der Rechner hat die Daten mit dem Programm verglichen und den Auftrag zur Beförderung erteilt. Dabei stellt sich heraus, daß der vorgesehene Übergabeplatz 7 noch mit einem Behälter belegt ist.

Der Rechner 20 schickt den Transportwagen 3 deshalb zu einem freien Zwischenlagerplatz 14, und läßt ihn dort das Transportgut 5 (Behälter mit unbestückten Leiterplatten) absetzen und zwischenlagern. Dann schickt der Rechner den Transportwagen 3 zu dem vorgesehenen Übergabeplatz 7, wo er den Behälter mit teilbestückten Leiterplatten abholt, der von der Arbeitskraft am dortigen Arbeitsstation 8 über den PC dem Rechner als abholbereit gemeldet worden war. Der Transportwagen 3 bringt, gesteuert vom Rechner, den Behälter zu einem anderen, vorbestimmten Übergabeplatz 7 einer Arbeitsstation, an dem die weitere Bestückung der Leiterplatten mit Bauelementen erfolgen soll. Nach dem Absetzen des Behälters fährt der Transportwagen 3 zum oben genannten Zwischenlagerplatz 14, um den zwischengelagerten Behälter mit den unbestückten Leiterplatten abzuholen und zum vorgesehenen Übergabeplatz 7 der Arbeitsstation 8 für die Erstbestückung zu bringen und dort abzustellen.

Das Aufnehmen und das Abstellen geschieht, wie bereits erwähnt, durch Querdrehen des Wagenoberteils 4 und Ausfahren des Schlittens 13 mit der Hubvorrichtung, die unter die Behälter mit dem Transportgut 5 (Leiterplatten) greift. Alle Daten (Steuerbefehle, Rückmeldungen usw.) werden über die Infrarot-Datenübertragungsstrecke 6 zwischen dem Transportwagen 3 und dem Transportgestell 1 und dort mit dem Rechner 20 ausgetauscht. Auf diese Art bedient der Transportwagen 3 von der Eingabe bis zur Ausgabe alle Arbeitsstationen innerhalb kürzester Zeit und ermöglicht so einen optimalen Arbeitsablauf.

## Patentansprüche

1. Transportsystem zum Transportieren von durch Codiermittel kenntlich gemachten Transportgut (5) mit einem Transportwagen (3), der in einem Transportgestell (1) über dessen gesamte Länge verfahrbar ist, das seitlich angeordnete Stellplätze (2) und Arbeitsstationen (8) hat und mit einem ortsfesten Rechner (20) zur Steuerung von Motoren (M) versehen ist, die den Transportwagen (3) sowie darauf montierte Vorrichtungen von und zu den Stellplätzen (2) und Arbeitsstationen (8) bewegen, von denen eine aus einem drehbaren Oberteil (4) besteht und denen individuelle Motorsteuerungen (21) und Motortreiber (22) zugeordnet sind, wobei das Transportsystem außerdem mit Stromschienen (28, 29) zur Stromversorgung des Transportwagens (3) und mit Datenübertragungsstrecken (6) zum Datenaustausch zwischen Transportwagen (3) und Rechner (20) versehen ist,
**dadurch gekennzeichnet,** daß der Motor für den Antrieb des Transportwagens (3) und die Motorsteuerungen (21) und Motortreiber (22) für die im Transportwagen (3) die bewegbaren Vorrichtungen antreibenden Motoren (M) im Transportgestell (1) untergebracht sind, daß die Datenübertragungsstrecken (6) aus Infrarotübertragungsstrecken betehen, die im Transportgestell (1) und im Transportwagen (3) entsprechend angeordnete Sender (S) und Empfänger (E) haben, von denen die im Transportgestell (1) durch einen Multiplexer (24) mit dem Rechner (20) und den Motorsteuerungen (21), und die Sender (S) und Empfänger (E) im Transportwagen (3) durch einen Demultiplexer (25) mit einem Scanner (26), mehreren Endschaltern (27) und mit je einem den Motoren (M) vorgeschalteten Encoder (EC) verbunden sind.

2. Transportsystem nach Anspruch 1, dadurch gekennzeichnet, daß das Oberteil (4) des Transportwagens (3) in 90°-Winkelschritten rundum drehbar ist und einen mit einer Hubvorrichtung versehenen, linear bewegbaren Schlitten (13) hat.

3. Transportsystsem nach Anspruch 1, dadurch gekennzeichnet, daß die Stellplätze (2), die unmittelbar Arbeitsstationen (8) zugeordnet sind, jeweils als Übergabeplatz (7) mit angesetzter Zuführkonsole (15) ausgestattet sind und alle daneben liegenden Stellplätze Zwischenlagerplätze (14) zum Zwischenlagern des Transportgutes (5) bilden.

4. Transportsystem nach Anspruch 3, dadurch gekennzeichnet, daß an zwei Stellplätzen (2) ein Eingabemodul (11) und ein Ausgabemodul (12) mit jeweils Doppelgurtbänder-Beförderung für das Transportgut (5) angesetzt sind.

5. Transportsystem nach Anspruch 4, dadurch gekennzeichnet, daß das Transportgestell (1) durch gleichartige Gestellmodule verlängerbar ist.

6. Transportsystem nach Anspruch 4, dadurch gekennzeichnet, daß mittels Verbindungsmodule wenigstens zwei gleichartige Transportsysteme in paralleler, senkrecht zueinander stehender oder Tandem-Anordnung weitergabegerecht verbindbar sind.

## Claims

1. Conveying system for conveying articles (5) identified by coding means with a trolley (3) which is movable over its entire length in a frame (1) which has laterally arranged storage places (2) and work stations (8) and is provided with a stationary computer (20) to control motors (M) which move the trolley (3) and devices mounted thereon from and to the storage places (2) and work stations (8), one of which comprises a rotatable upper part (4) and to which individual motor controllers (21) and motor drivers (22) are allocated, wherein the conveying system is also provided with conductor bars (28, 29) to supply power to the trolley (3) and with data transmission links (6) for data exchange between trolley (3) and computer (20), characterized in that the motor for driving the trolley (3) and the motor controllers (21) and motor drivers (22) for the motors (M) driving the movable devices in the trolley (3) are accommodated in the frame (1), that the data transmission links (6) comprise infrared transmission links which have correspondingly arranged transmitters (S) and receivers (E) in the frame (1) and in the trolley (3), of which those in the frame (1) are connected by a multiplexer (24) to the computer (20) and the motor controllers (21), and the transmitters (S) and receivers (E) in the trolley (3) by a demultiplexer (25) to a scanner (26), several limit switches (27) and to an encoder (EC) in each case which is series-connected to the motors (M).

2. Conveying system according to Claim 1, characterized in that the upper part (4) of the trolley (3) is rotatable all round in 90° angle steps and has a linearly movable carriage (13) provided with a lifting device.

3. Conveying system according to Claim 1, characterized in that each of the storage places (2), which are directly associated with work stations (8) is equipped as a transfer place (7) with a feed console (15) attached thereto and all adjacent storage places form intermediate storage places (14) for the intermediate storage of the articles (5).

4. Conveying system according to Claim 3, characterized in that at two storage places (2) an input module (11) and an output module (12) are provided which both have twin-belt conveyance for the articles (5).

5. Conveying system according to Claim 4, characterized in that the frame (1) can be extended by means of similar frame modules.

6. Conveying system according to Claim 4, characterized in that at least two similar conveying systems can be connected in a parallel, mutually perpendicular or tandem configuration by means of connection modules so as to be suitable for further conveyance.

## Revendications

1. Système de transport pour le transport d'articles à transporter (5), annoncés par des moyens de codage, par un chariot de transport (3) mobile dans un châssis de transport (1) et sur toute la longueur de celui-ci, comprenant des logements (2) et des stations de travail (8) disposé(e)s latéralement, et muni d'un calculateur fixe (20) pour la commande de moteurs (M) qui déplacent le chariot de transport (3), ainsi que les équipements montés dessus, de et vers les logements (2) et les stations de travail (8), l'un desdits équipements étant constitué par une partie supérieure (4) rotative, et des commandes de moteur (21) et des circuits d'attaque de moteur (22) individuels étant associés à ces équipements, le système de transport étant en outre muni de rails conducteurs (28, 29) pour l'alimentation en courant du chariot de transport (3) et de voies de transmission de données (6) pour l'échange de données entre le chariot de transport (3) et le calculateur (20), caractérisé en ce que le moteur pour l'entraînement du chariot de transport (3), les commandes de moteur (21) et les circuits d'attaque de moteur (22) pour les moteurs (M) entraînant les équipements mobiles du chariot de transport (3) sont logés dans le châssis de transport (1), en ce que les voies de transmission des données (6) sont constituées par des voies de transmission par infrarouge comportant des émetteurs (S) et des récepteurs (E) disposés en conséquence dans le châssis de transport (1) et dans le chariot de transport (3), les émetteurs (S) et récepteurs (E) se trouvant dans le châssis de transport (1) étant reliés par un multiplexeur (24) au calculateur (20) et aux commandes de moteur (21), et les émetteurs (S) et récepteurs (E) du chariot de transport (3) étant reliés par un démultiplexeur (25) à un scanner (26), à plusieurs commutateurs de fin de course (27) et à un codeur (EC) monté à chaque fois en amont des moteurs (M).

2. Système de transport suivant la revendication 1, caractérisé en ce que la partie supérieure (4) du chariot de transport (3) peut effectuer une rotation complète en pas angulaires de 90°, et comporte un coulisseau (13) mobile linéairement, muni d'un dispositif de levage.

3. Système de transport suivant la revendication 1, caractérisé en ce que les logements (2), qui sont associés directement à des stations de travail (8), sont réalisés à chaque fois sous la forme d'un emplacement de transfert (7) comportant un pupitre d'amenage (15) rapporté, et en ce que tous les logements adjacents constituent des emplacements de stockage intermédiaire (14) pour le stockage intermédiaire des articles à transporter (5).

4. Système de transport suivant la revendication 3, caractérisé en ce qu'un module de chargement (11) et un module de déchargement (12) comportant chacun un convoyage à bandes jumelées pour les articles à transporter (5), sont rapportés dans deux logements (2).

5. Système de transport suivant la revendication 4, caractérisé en ce que le châssis de transport (1) peut être rallongé par des modules de châssis du même type.

6. Système de transport suivant la revendication 4, caractérisé en ce que des moyens de liaison permettent de relier au moins deux systèmes de transport du même type suivant une disposition en tandem, parallèle ou perpendiculaire, adaptée au transfert.
